# EUROPEAN PATENT SPECIFICATION

(11) **EP 2 519 765 B1**
(45) Date of publication and mention of the grant of the patent: **09.10.2013**
(21) Application number: 10810878.8
(22) Date of filing: 20.12.2010
(51) Int. Cl.: F24J 2/51, F16L 11/22, F16L 59/14, F16L 59/153, F24J 2/46

(54) **SOLAR PANEL TUBE**
SONNENKOLLEKTORRÖHRE
TUBE DE PANNEAU SOLAIRE

(30) Priority: 30.12.2009 IT BG20090069
(43) Date of publication of application: 07.11.2012
(73) Proprietor: Aktarus Group S.r.l., 24121 Bergamo (IT)
(72) Inventor: Spinelli, Paolo, 20125 Milano (IT); Stellato, Michaela, 20125 Milano (IT); Sala, Alessandro, 24040 Bonate Sopra (BG) (IT); Sala, Riccardo, 24040 Chignolo D'Isola (GB) (IT)
(74) Representative: Gatti, Enrico
(86) International application number: PCT/IB2010/003332
(87) International publication number: WO 2011/080563

(56) References cited:
- EP-A1- 1 707 897
- DE-U1- 20 009 556
- DE-U1- 20 103 677
- DE-U1-202007 018 533
- GB-A- 2 417 057
- US-A- 4 744 842
- US-A1- 2007 102 055

## Description

The present invention refers to a solar panel tube. In particular it refers to a tube used to convey a cold fluid to a solar panel and receive hot fluid back. Such a solar panel tube is, for instance, known from document DE-U-200 09 556.

For this purpose pairs of pipes normally made of stainless steel with diameter of 16 - 20 - 25 mm are normally used. Each tube is thermally insulated by means of an insulating material wrapped around it. Normally, silicone rubber is used as the insulating material, with thickness of 20 or 30 mm. The two rubber windings are joined to each other to form one single body. The rubber is often covered by a fine layer of sealing plastic.

Said pair of tubes, in the case of a 20 mm diameter pipe and an insulation of 30 mm, therefore has an overall dimension of approximately 140 mm x 70 mm.

These dimensions make transport and installation of said tubes difficult.

The aim of the present invention is to provide a more efficient solar panel tube with smaller dimensions than those of the known art.

A further aim is to insulate the solar panel tube by means of a simple procedure which at the same time guarantees a very efficient insulation.

According to the present invention, said aims and others are achieved by a solar panel tube, comprising a first pipe; a second pipe; a first insulating material surrounding said first pipe; a second insulating material surrounding said second pipe; said first insulating material comprising a supporting layer treated with aerogel; said second insulating material comprising a supporting layer treated with aerogel; wherein said first and second insulating materials are wrapped in a nylon thread winding and said first and second insulating materials are further wound by a protective layer. Further characteristics of the invention are described in the dependent claims.

This solution has many advantages with respect to the solutions of the known art.

The solar panel tube according to the present invention has smaller overall dimensions and offers maximum performance.

It withstands UV rays, chemical and atmospheric agents for over 10 years. It is shock resistant, resistant to the action of animals and birds and withstands pressures and heat, and does not change dimension.

It can be stored and transported by means of normal pallets, due to the fact that since it is of smaller dimensions, the tube can be more easily wound on smaller diameters. In particular, with the same length of solar panel tube, a unit produced according to the present invention has a volume of 35% compared to the traditional type.

The characteristics and advantages of the present invention will become evident from the following detailed description of one of its practical embodiments, illustrated by way of non-limiting example in the accompanying drawings, in which:

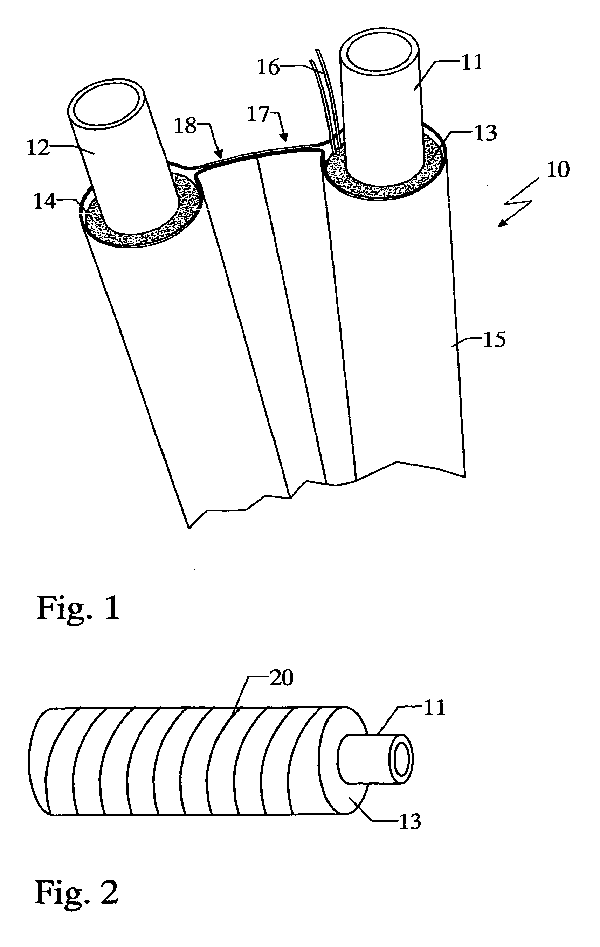

figure 1 shows schematically a solar panel tube, according to the present invention;
figure 2 shows the insulating protection covered by a nylon thread, according to the present invention.

Referring to the attached figure, a solar panel tube 10, according to the present invention, comprises a first pipe 11 and a second pipe 12, both surrounded respectively by a first insulating material 13 and a second insulating material 14.

The first insulating material 13 and the second insulating material 14 are wrapped in a protective layer 15.

For the layer 15 a high-resistance polyester fabric is used coated in PVC (480 g/m²) with a total weight of 650 g/m² and thickness of 1 mm. This results in a self-extinguishing layer, which produces clear non-toxic fumes and does not drip if burnt.

The layer 15 protects the insulation from the aggression of atmospheric agents, insects, rodents and birds.

The solar panel tube 10 preferably also comprises a cable 16 (or several cables) positioned between the insulating material 13 or 14 and the layer 15. The cable 16 is an electric cable, for operation of the solar panel system.

The pipes 11 and 12 are tubes made of stainless steel, preferably corrugated, with a varying diameter according to requirements, normally 16 - 20 - 25 mm.

Alternatively they can be made of copper tubes.

The insulating materials 13 and 14 consist of a supporting layer treated with aerogel.

A high-resistance polyester fabric with thickness of 5 mm weighing approximately 160 kg/m³ is used as a supporting layer.

The supporting layer is treated with aerogel in a quantity of approximately 150 g/cm².

Aerogel is a substance in the solid state similar to gel in which the liquid component is replaced by gas. The result is a solid foam having many properties.

Aerogel normally consists of 99.8% air and 0.2% trimethylsilylate silica.

Each of the insulating materials 13 and 14, already treated with aerogel, consists of a strip which is wound around the pipes 11, 12.

The insulating material is kept in position by a spiral winding with a nylon thread 20 with diameter of approximately 0.3 mm, with turns having a centre distance of 2 mm.

In particular, during production, each pipe 11 and 12 is inserted in a conical structure in conjunction with the insulating material 13 and 14 so as to wrap the insulating material on the pipe. At the outlet of the conical structure there are preferably 3 reels of nylon thread 20, arranged at an angle of 120° from one another, which secure the insulating material on the pipe.

Said operation compacts the insulating material, eliminating any layers of air that may be created around the pipes which can reduce the insulation coefficient.

On the finished product, the nylon thread 20 makes the insulation material compact and allows the tubes to be cut with the normal tools used on site without fraying and tearing.

The protective layer 15 is wrapped over the insulating material 13 and 14 so that the solar panel tube 10 is completely enveloped and at the same time forms joining tabs 17 and 18 between the two insulated pipes. During this operation the cable 16 is also inserted between the layer 15 and (for example) the insulating material 13.

The layer 15 is as wide as the circumference of the two pipes plus a length equal to twice the distance to be maintained between one pipe and the other.

The protective layer 15 therefore has a shape which in section recalls an 8 with the joint between the two circles elongated to space them.

The tabs 17 and 18 are formed by overlapping two portions of the protective layer 15 which, during production, are heat-sealed to each other without the use of glue.

They are each approximately 1 cm long and therefore the two tubes are spaced from each other by approximately 2 cm.

The tabs 17 and 18 facilitate fastening of the tube to the installation wall, simply by means of screws or other, as an alternative to brackets; they can also be cut in the centre along the intermediate joining line and the tubes separated from each other. Even after separation of the two tubes, the length of said tabs provides space for fixing the single tubes.

The layer 15 binds the two tubes together creating a product which is compact, flexible, cannot be attacked by external agents and has a high insulating capacity.

Tests have been performed to compare a traditional tube with a tube according to the invention.

A traditional tube was used with 16 mm stainless steel internal pipes, and a silicone rubber insulation with thickness of 20 mm.

For the tube according to the present invention, a tube with 16 mm stainless steel internal pipes 11, 12 was used, and an insulation 13, 14, according to the present invention with thickness of 5 mm.

The following tables 1 and 2 show the results of the tests.

| TABLE 1 | Traditional tube | Tube according to the invention |
|---|---|---|
| Operating temperature | -50°C ÷ +150°C | -200°C ÷ +200°C |
| Heat dispersion at 90°C | 15.5 | 13.0 |
| [W/m] | | |

| TABLE 2 | Thermal conductivity of traditional tube | Thermal conductivity of tube according to the invention |
|---|---|---|
| Work temperature | [W/(m*k)] | [W/(m*k)] |
| 50°C | 0.040 | 0.014 |
| 75°C | 0.045 | 0.015 |
| 100°C | Not possible | 0.016 |
| 150°C | Not possible | 0.019 |
| 200°C | Not possible | 0.023 |

Note the greater efficiency of the tube according to the present invention with respect to a traditional tube, with a much smaller dimension. In fact, the traditional tube has an overall dimension of 112 x 56 mm, while the tube according to the present invention has an overall dimension of 72 x 28 mm, with a 20 mm separation between one tube and the other.

Note also the possibility of working with temperatures above 100°C without any difficulty.

It is also possible to use a layer of insulation of one type or with lesser thickness to insulate one pipe (for example the cold pipe) and a different type of insulating layer or a greater thickness for the other pipe (for example the hot pipe).

## Claims

1. Solar panel tube, comprising a first pipe (11); a second pipe (12); a first insulating material (13) surrounding said first pipe (11); a second insulating material (14) surrounding said second pipe (12); said first insulating material (13) comprising a supporting layer treated with aerogel; said second insulating material (14) comprising a supporting layer treated with aerogel; wherein said first (13) and second (14) insulating materials are wrapped in a nylon thread winding (20) and said first (13) and second (14) insulating materials are further wrapped by a protective layer (15).

2. Solar panel tube as claimed in claim 1 **characterised in that** said protective layer (15) is a layer of high-resistance polyester fabric coated in PVC.

3. Solar panel tube as claimed in one of the preceding claims **characterised in that** said aerogel comprises trimethylsilylate silica gel.

4. Solar panel tube as claimed in one of the preceding claims **characterised in that** said first (13) and second (14) insulating material have a thickness of between 3 and 8 mm.

5. Solar panel tube as claimed in one of the preceding claims **characterised in that** said first (13) and second (14) insulating material have a thickness of approximately 5 mm.

6. Solar panel tube as claimed in one of the preceding claims **characterised in that** said protective layer (15) wraps said first (13) and second (14) insulating material and forms joining tabs (17, 18) of said first (11) and second (12) pipes, separating said first (11) and second (12) pipes by a pre-set distance.

7. Solar panel tube as claimed in one of the preceding claims **characterised in that** said nylon thread (20) is wound in a spiral with a pitch of 2 mm.

## Patentansprüche

1. Solarkollektorröhre mit einem ersten Rohr (11); einem zweiten Rohr (12); einem ersten isolierenden Material (13), das das erste Rohr (11) umgibt; einem zweiten isolierenden Material (14), das das zweite Rohr (12) umgibt; wobei das erste isolierende Material (13) eine Trägerschicht umfasst, die mit Aerogel behandelt ist; das zweite isolierende Material (14) eine Trägerschicht umfasst, die mit Aerogel behandelt ist; wobei das erste (13) und das zweite (14) isolierende Material in einer Nylonfadenwicklung (20) eingewickelt ist und das erste (13) und das zweite (14) isolierende Material außerdem durch eine Schutzschicht (15) umwickelt ist.

2. Sonnenkollektorröhre nach Anspruch 1, **dadurch gekennzeichnet, dass** die Schutzschicht (15) eine Schicht aus mit PVC beschichtetem Polyestergewebe mit hoher Widerstandsfähigkeit ist.

3. Sonnenkollektorröhre nach einem der vorhergehenden Ansprüche, **dadurch gekennzeichnet, dass** das Aerogel Trimethylsilylatesilicagel enthält.

4. Sonnenkollektorröhre nach einem der vorhergehenden Ansprüche, **dadurch gekennzeichnet, dass** das erste (13) und das zweite (14) isolierende Material eine Dicke zwischen 3 und 8 mm hat.

5. Sonnenkollektorröhre nach einem der vorhergehenden Ansprüche, **dadurch gekennzeichnet, dass** das erste (13) und das zweite (14) isolierende Material eine Dicke von etwa 5 mm hat.

6. Sonnenkollektorröhre nach einem der vorhergehenden Ansprüche, **dadurch gekennzeichnet, dass** die Schutzschicht (15) um das erste (13) und das zweite (14) isolierende Material gewickelt ist und Verbindungsstreifen (17, 18) des ersten (11) und des zweiten (12) Rohres bilden, wodurch das erste (11) und das zweite (12) Rohr mit einem vorbestimmten Abstand beabstandet sind.

7. Sonnenkollektorröhre nach einem der vorhergehenden Ansprüche, **dadurch gekennzeichnet, dass** der Nylonfaden (20) in einer Spirale mit einer Steigung von 2 mm gewickelt ist.

## Revendications

1. Tube de panneau solaire, comprenant un premier tuyau (11) ; un deuxième tuyau (12) ; un premier matériau isolant (13) entourant ledit premier tuyau (11) ; un deuxième matériau isolant (14) entourant ledit deuxième tuyau (12) ; ledit premier matériau isolant (13) comprenant une couche de support traitée avec un aérogel ; ledit deuxième matériau isolant (14) comprenant une couche de support traitée avec un aérogel ; dans lequel ledit premier matériau isolant (13) et ledit deuxième matériau isolant (14) sont enveloppés dans un enroulement de fil de nylon (20) et ledit premier matériau isolant (13) et ledit deuxième matériau isolant (14) sont en outre enveloppés par une couche protectrice (15).

2. Tube de panneau solaire selon la revendication 1, **caractérisé en ce que** ladite couche protectrice (15) est une couche de tissu de polyester de grande résistance revêtu de PVC.

3. Tube de panneau solaire selon l'une des revendications précédentes, **caractérisé en ce que** ledit aérogel comprend un gel de silice triméthylsilylate.

4. Tube de panneau solaire selon l'une des revendications précédentes, **caractérisé en ce que** ledit premier matériau isolant (13) et ledit deuxième matériau isolant (14) ont une épaisseur comprise entre 3 et 8 mm.

5. Tube de panneau solaire selon l'une des revendications précédentes, **caractérisé en ce que** ledit premier matériau isolant (13) et ledit deuxième matériau isolant (14) ont une épaisseur d'approximativement 5 mm.

6. Tube de panneau solaire selon l'une des revendications précédentes, **caractérisé en ce que** ladite couche protectrice (15) enveloppe ledit premier matériau isolant (13) et ledit deuxième matériau isolant (14) et forme des pattes de raccordement (17, 18) dudit premier tuyau (11) et dudit deuxième tuyau (12), en séparant ledit premier tuyau (11) et ledit deuxième tuyau (12) d'une distance préréglée.

7. Tube de panneau solaire selon l'une des revendications précédentes, **caractérisé en ce que** ledit fil de nylon (20) est enroulé dans une spirale avec un pas de 2 mm.
